# EUROPEAN PATENT SPECIFICATION

(11) **EP 1 787 450 B1**
(45) Date of publication and mention of the grant of the patent: **06.08.2014**
(21) Application number: 05773143.2
(22) Date of filing: 17.08.2005
(51) Int. Cl.: H04L 29/06

(54) **Information selection**
Informationsauswahl
Sélection d'informations

(30) Priority: 19.08.2004 GB 0418563
(43) Date of publication of application: 23.05.2007
(73) Proprietor: Hutchison Whampoa Three G IP (Bahamas) Limited, Nassau, New Providence (BS)
(72) Inventor: TAYLOR, Richard, Charles, Southam, Warwickshire CV47 2AR (GB); BALDWIN, Andrew, Taplow, Maidenheal, Berkshire SL6 0DH (GB); SEAL, Christopher, Henry, Reading, Berkshire RG30 4EU (GB)
(74) Representative: Jennings, Michael John
(86) International application number: PCT/GB2005/003219
(87) International publication number: WO 2006/018638

(56) References cited:
- GB-A- 2 382 683
- US-A1- 2001 052 841
- US-A1- 2002 167 416
- US-A1- 2003 120 749

## Description

The present invention relates to the delivery and display of data or other information to users of data devices in accordance with certain parameters, such as the personal preferences of the users and/or system factors.

It is known to provide information to users of computing devices which are connected to a network, commonly referred to as client devices, from a central server or servers. Such systems presently range from wire connected computer networks having a plurality of client PCs connected to information services via the Internet to mobile computing devices such as 3G mobile telephones which are also enabled to provide access to information for users of such client devices. The present invention has been developed in this latter context and will be described herein principally in relation to this context but it will be understood that this invention has a wider application.

It is known, with regards to the provision of information to users of client devices, to provide information in different categories or "channels", for instance "news", "sports", "entertainment" etc. In particular a user may be able to subscribe to a particular channel (effectively indicate an interest in a particular category of information) such that an information service to which they connect will provide information relating to that particular channel.

One context with which the present invention is concerned is the time at which information is provided by or obtained from an information server without being specifically instructed to do so by a user. This occurs for instance when a server wishes to send an alert or other new piece of information relating to a particular channel (sometimes referred to as a "teaser") and such information may be sent to a client device and displayed to the user as an item of potential interest according to his subscription the user is at that time not actively browsing the information content. The actual mechanism of providing such information is not directly relevant to the present invention but may involve either the server side pushing the information to the client or the client periodically in the background polling the server device for such information.

Clearly it would not be acceptable for all client devices to receive and display all such alert messages on all channels regardless of which channels the particular users had subscribed to. It is therefore known to store, at the server side, details of particular channels to which particular users have subscribed and to ensure that only relevant alert messages are sent to the users. While this has advantages in terms of the usability and convenience of the system for users, this system requires a considerable additional overhead, for instance in terms of the functionality of the server devices which are required to store up to date information regarding the various user subscriptions and to make decisions on the basis of that information regarding what messages to send to which client devices.

GB2382683A discloses a message processing system. US 2003/120749A1 discloses obtaining content for a wireless device. US2001/052841A1 and US2002/167416A1 describe an advertising system capable of transmitting different types of advertising information.

The present invention provides a method of providing and fetching and displaying information to a user of a client device connected to a network comprising:
(a) providing a message to the client device via the network, the message comprising a first portion containing an indication of display information to which the message relates and a second portion identifying one or more characteristics of the display information, said indication containing a subset of the display information which includes a link that can enable the client device to fetch the full content of the display information;
(b) comparing, at the client device, one or more parameters of the client device with said one or more characteristics and deciding on the basis of the comparison whether to display the display information; and
(c) fetching the full content of the display information that is related to the indication at the client device and displaying this information if the decision in step (b) is positive,
(d) wherein a characteristic of the display information identified in said second portion of said message is a valid display time for said display information and said steps of comparing comprises comparing said valid display time with a current time of said client device. client devices with the decisions regarding what information is to be displayed to the users being left to the client devices. Therefore the additional complexity mentioned above at the server side with regards to storing user preferences and decision making are avoided.

In what may be considered a simplest embodiment the full content of all alert and/or other messages on all channels may be broadcast to all client devices enabling the client devices to select which of the messages are to be displayed to the respective users.

Such an arrangement would potentially markedly increase the amount of data being broadcast on such a network and it may therefore raise issues of sufficient bandwidth.

Therefore the present invention further envisages that the messages which are broadcast to all clients are simply brief messages indicating that alerts on particular channels are available. Such messages would not use so much network bandwidth. The client devices, upon receipt of such messages, are able to recover from appropriate locations the full information content of the messages which are available and which relate to channels to which the particular users subscribe. Such an arrangement retains the above-mentioned advantages of the present invention in that the decision making regarding which information is to be displayed to which users is still left to the client devices while also reducing the amount of data to be carried by the network.

In another aspect, information is provided from a server device to one or more client devices with an indication of one or more conditions that should be met by the client device for display of the information. These conditions may be the hardware or software capability of the client device, the required current network bandwidth, protocol or quality, or the local time at the client device.

In this aspect also the decision regarding whether particular information is to be displayed to the user is taken by the client device on the basis of its current condition.

As mentioned above, this invention has particular use in the context of 3G mobile telephones which are also enabled to provide information display services to users. In this context, the invention is preferably implemented using XML coding with suitable tags.

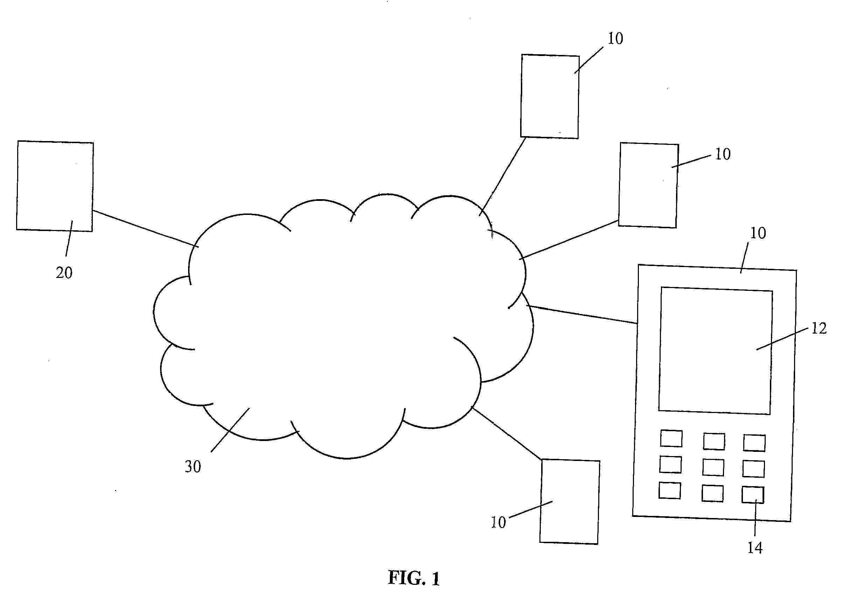

The present invention will be better understood from the following description of preferred embodiments by way of example with reference to the accompanying Fig. 1 which is a schematic illustration of the elements of a network within which the embodiments of the invention may be implemented.

Fig. 1 is provided by way of example to illustrate one kind of network in which this invention may be used. Fig. 1 is intended to illustrate a 3G mobile telephone network, although the detail of the actual connections to the network are omitted as they are not relevant to the present invention and so Fig. 1 may be taken as illustrative of many different kinds of network.

In principle then the invention is implemented, in the preferred embodiment, in a 3G mobile telephone network in which users are provided with handsets 10. Each handset is provided with a display 12 and user keys 14 in the usual way, and each handset also has memory and processing means (not shown) to enable it to process and respond as required to incoming signals from the network, and from the user. In particular, in the embodiment described in more detail below, each handset 10 includes an XML processor enabling it to receive and interpret XML code transmitted to it via the network.

The handsets 10 are connected in the usual fashion to a communications network 30 and thereby to each other for telephone calls as well as to service provider servers for particular purposes. In the present instance, particular reference is made to the fact that connected to the network 30 is teaser server device 20. This server is configured to transmit teaser messages relating to information on various channels to the user devices 10 via the network 30. The transmission protocols by which such messages are transmitted are not relevant to the present invention and therefore are not described here, and all other details of the connection and communication between the various devices may be entirely conventional.

In general terms and as will be explained in more detail below, the first described embodiment of the invention can be considered to operate in three stages.

Firstly, a list of channels including an "identifier" and associated textual descriptions is provided to a client device. The client device presents these channels to the user of the device using the textual descriptions provided. This may conveniently be part of a configuration option of the client device presented to the user at start up or to which the user may have access by choice. The user is able to select or unselect the channels as required and the users choice of channels is stored on the client device.

Secondly, all content delivered by the information service or other source is provided to the client tagged with a "channel" identifier. These identifiers correspond to the identifiers provided initially with the list of channels.

Thirdly, when the content is received the client uses the stored information relating to the user's chosen channels to filter the received copy information. The received information may contain the entire content to be displayed to the user if a user has subscribed to the relevant channel. Alternatively it may be that the information is not the complete data but is merely a subset describing the full data and includes a link enabling the client to fetch the full content if it relates to a channel which the user has chosen.

In the preferred embodiment the client devices are 3G mobile telephone devices enabled to process and display on the basis of received XML cording. In this context, the connectivity between the client and the server is via the TCP/IP protocol but it will be understood that any suitable networking connectivity is usable with the present invention. Bearing this in mind, described below are certain XML tags which may be used to implement this embodiment of the invention, while it is to be understood that these are merely exemplary, and nothing in the following is intended to present complete XML code.

Firstly, a 'channels' tag is defined which is used to provide a list of channels to which the users can subscribe or unsubscribe.

```
 <channels>
  <!-- Operator 'spam' channel -->
  <channel
   id="1"
   subscribed="true"
   canunsubscribe="false"
    posn="1"
    title="Channel title"
    description="Channel description"/>
   <!-- News -->
   <channel
    id="2"
    subscribed="false"
    canunsubscribe="true"
    posn="3"
    title="Channel title"
    description="Channel description"/>
  <!-- Sport -->
  <channel
   id="3"
   subscribed="false"
   canunsubscribe="true"
   posn="2"
   title="Channel title"
   description="Channel description"/>
 </channels>
```

As is standard with markup language tagging, the above section opens with a <channels> tag and is closed with a </channels> tag. Between these tags, each available channel is defined by a <channel> tag which defines the following attributes of the channels:
**id attribute:**
   Each channel has a unique identifier to allow teasers to be associated with this channel.
**subscribed attribute:**
   The default Boolean value for this channel subscription, i.e. if set true then the user will see any associated teasers, unless they have specified otherwise. Some channels, such as Adult, may be defaulted 'false' when first delivered to the handset.
**canunsubscribe attribute:**
   A Boolean value which specifies whether the user can unsubscribe from this channel. The application should grey out the choice in Preferences, whilst still showing the user it is set.
**posn attribute:**
   The position in the channel list that this channel should appear when viewed in Preferences. A value of 1 signifies the top of the list.
**title attribute:**
   The title of a channel, for displaying to the user in Preferences.
**description attribute:**
   The description of a channel, for displaying to the user in Preferences.

On the basis of the information provided in this way, a user device provides a list of available channels to the user to enable the user to make a subscription selection.

Secondly, a 'teasers' tag is defined which is used to send the teaser information to the client devices. The complete list of teasers does not need to be sent each time to the client device. It may the case that only a subset is sent, being ones that are new or require updating. Between the <teasers> and </teasers> tags one or more teasers may be defined, each between <teaser> and </teaser> tags. In the code illustrated below, the teasers have a type, and teasers are sent grouped by type, with the <teasers> tag taking the type definition as a parameter.

```
 <teasers type="a">
  <teaser
   url="http://link_to_product"
   starttime="2004-06-11 13:00"
   endtime="2004-06-12 13:00"
   id="1"
   minclientversion="1.0.0"
   channelid="1"
   posn="1"
   bgcol="0x000000">
   <img url="http://url_to_image"/>
   <title colour="0xffff24" text="Teaser title"/>
   <body text="Teaser body"/>
  </teaser>
  <teaser
   url="http://link_to_product"
   starttime="2004-06-11 13:00"
   endtime="2004-06-12 13:00"
   id="3"
   minclientversion="1.0.0"
   channelid="3"
   posn="2"
   bgcol="0x000000">
   <img url="http://url_to_image" align="right"/>
   <title text="Teaser title"/>
   <body text="Teaser body"/>
  </teaser>
 <teasers>
 <teasers type="b">
  <teaser url="http://link_to_product" id="1" posn="2">
   <img url="http://url_to_image"/>
  </teaser>
  <teaser url="http://link_to_product" id="2" posn="1">
   <img url="http://urk_to_image"/>
  </teaser>
 </teasers>
```

As can be seen, the <teaser> tag can take the following attributes:
**url attribute:**
   The URL that links to the real content or product, i.e. the click-through URL.
**starttime attribute:**
   The earliest time that the teaser should be displayed. This is matched to the handset time. Before this time, the teaser will not be visible. If the timestamp is invalid, the teaser should be ignored and deleted.
**endtime attribute:**
   The latest time that the teaser should be displayed. This is matched to the handset time. After this time, the teaser will no longer be visible. If the timestamp is invalid, the teaser should be ignored and deleted.
**id attribute:**
   Each teaser has a unique id. If a new teaser arrives on the handset with the same id as an existing one, the old one will be overwritten, regardless of its expiry timestamp.
**minclientversion attribute:**
   The minimum version number of the handset client application that is required for this teaser. This is for future-proofing, in case some future versions of clients have superior features.
**channelid attribute:**
   The channel to which this teaser belongs. If the user unsubscribes from this channel, then the teaser will not be shown, and its associated image need never be fetched.
**posn attribute:**
   The position in any list or ordering that this teaser should appear.
**bgcol attribute:**
   The background colour, should this teaser have text / title elements.

Variations on this configuration can of course be made to implement alternative or additional features, and a non-exhaustive list of such features follows:
A teaser may be associated with more than one channel, for example News and Sport, or 'Football' and 'UEFA'. To accommodate this, the channelid attribute can be defined to accept more than one value:
   <channelid="3,5,9">
A teaser may be defined such that it should be displayed only in conditions where the network quality is of a particular connection type/status. This may be for instance when a phone is in a 3G connected area because a 2G connection cannot support the download or streaming required to display the teaser. This may be achieved by a teaser attribute:
   <nq="3G, 64k">

The phone or other user device automatically filters on the basis of such a definition without user intervention.

Similarly, other device filtering may be implanted by the definition of further attributes, such as defining that the content quality (<cq="4">) or device capability (<player="j2me, midp2, jsr135, jsr84"> to define the onboard media players required for the teaser to be played) required for the teaser to be displayed.

Furthermore, the teaser may be defined such that it should be displayed only in conditions dependent on the network provider who are carrying the data relating to the teaser. For example, the teaser may be sent to a user subscribed to a certain network provider but who are using a roaming partner network provider (ie during international roaming) and either displayed or not displayed depending on the set conditions for a particular client subscription.

As mentioned above, it may be the case that the teaser definition does not include the actual content to be displayed, but rather a URL from where the content can be obtained. In this case, it may defined that the user devices should each wait a random period before attempting to download the content from the URL to prevent overload, and there may be further defined a delay spread within which the device should randomise its time delay (<request-delay-spread="30000"> (in milliseconds)).

## Claims

1. A method of providing and fetching and displaying information to a user of a client device connected to a network comprising:
(a) providing a message to the client device (10) via the network, the message comprising a first portion containing an indication of display information to which the message relates and a second portion identifying one or more characteristics of the display information, said indication containing a subset of the display information which includes a link that can enable the client device to fetch the full content of the display information for a particular client subscription;
(b) comparing, at the client device (10) one or more parameters of the client device (10) with said one or more characteristics and deciding on the basis of the comparison whether to display the display information; and
(c) fetching the full content of the display information that is related to the indication at the client device and displaying this information if the decision in step (b) is positive,
(d) wherein a characteristic of the display information identified in said second portion of said message is a valid display time for said display information and said steps of comparing comprises comparing said valid display time with a current time of said client device (10).

2. A method according to claim 1 in which said first portion of the message contains an indication of a location in said network from where said display information may be retrieved and said step of displaying includes retrieving the display information from said location.

3. The method according to claim 2 in which said indication of a location is a URL.

4. A method according to any of claims 1 to 3 in which a characteristic of the display information identified in said second portion of said message is an indication of one or more subject matter categories of the display information and said one or more parameters of the client device comprise a record of which subject matter category information should be displayed.

5. A method according to claim 4 comprising presenting to the user a list of available subject matter categories and storing said record according to a user selection from said list.

6. A method according to any of claims 1 to 5 in which a characteristic of the display information identified in said second portion of said message is a condition of the client device necessary or preferred for display of the information.

7. A method according to claim 6 in which said condition of the client device comprises a network connection with a bandwidth greater than a specified value.

8. A method according to claim 6 in which said condition of the client device comprises a network connection according to a specified connection type.

9. A method according to claim 8 in which said connection type is 3G.

## Patentansprüche

1. Verfahren zum Bereitstellen und Abholen und Anzeigen von Informationen gegenüber einem Benutzer eines mit einem Netzwerk verbundenen Clientgeräts, umfassend:
(a) Bereitstellen einer Nachricht an das Clientgerät (10) über das Netzwerk, wobei die Nachricht einen ersten Teil, der einen Hinweis auf Anzeigeinformationen enthält, auf welche sich die Nachricht bezieht, und einen zweiten Teil, der eine oder mehrere Eigenschaften der Anzeigeinformationen bezeichnet, aufweist, wobei der genannte Hinweis einen Teilsatz der Anzeigeinformationen enthält, der einen Link beinhaltet, der das Clientgerät zum Abholen des vollen Inhalts der Anzeigeinformationen für ein bestimmtes Clientabonnement befähigen kann,
b) Vergleichen von einem oder mehreren Parameter(n) des Clientgeräts (10) am Clientgerät (10) mit der/den genannten einen oder mehreren Eigenschaft(en) und Entscheiden auf der Basis des Vergleichs, ob die Anzeigeinformationen anzuzeigen sind, und
c) Abholen des vollen Inhalts der Anzeigeinformationen, die mit dem Hinweis am Clientgerät in Bezug stehen, und Anzeigen dieser Informationen, wenn die Entscheidung in Schritt (b) positiv ausfällt,
d) wobei eine Eigenschaft der Anzeigeinformationen, die in dem genannten zweiten Teil der genannten Nachricht bezeichnet wird, eine gültige Anzeigezeit für die genannten Anzeigeinformationen ist und der genannte Vergleichsschritt das Vergleichen der genannten gültigen Anzeigezeit mit einer aktuellen Zeit des genannten Clientgeräts (10) aufweist.

2. Verfahren nach Anspruch 1, wobei der genannte erste Teil der Nachricht einen Hinweis auf einen Ort in dem genannten Netzwerk enthält, von wo die genannten Anzeigeinformationen abgerufen werden können, und der genannte Anzeigeschritt das Abrufen der Anzeigeinformationen von dem genannten Ort beinhaltet.

3. Verfahren nach Anspruch 2, wobei der genannte Hinweis auf einen Ort eine URL ist.

4. Verfahren nach einem der Ansprüche 1 bis 3, bei dem eine in dem genannten zweiten Teil der genannten Nachricht bezeichnete Eigenschaft der Anzeigeinformationen ein Hinweis auf eine oder mehrere Themenkategorien der Anzeigeinformationen ist und der genannte eine oder die genannten mehreren Parameter des Clientgeräts eine Aufzeichnung davon aufweist bzw. aufweisen, welche Themenkategorie angezeigt werden sollte.

5. Verfahren nach Anspruch 4, welches das Präsentieren einer Liste verfügbarer Themenkategorien gegenüber dem Benutzer und das Speichern der genannten Aufzeichnung gemäß einer Auswahl des Benutzers aus der genannten Liste aufweist.

6. Verfahren nach einem der Ansprüche 1 bis 5, bei dem eine Eigenschaft der in dem genannten zweiten Teil der genannten Nachricht bezeichneten Anzeigeinformationen eine Bedingung des Clientgeräts ist, die für die Anzeige der Informationen notwendig ist oder bevorzugt wird.

7. Verfahren nach Anspruch 6, bei dem die genannte Bedingung des Clientgeräts eine Netzwerkverbindung mit einer Bandbreite aufweist, die größer als ein vorgegebener Wert ist.

8. Verfahren nach Anspruch 6, bei dem die genannte Bedingung des Clientgeräts eine Netzwerkverbindung gemäß einem vorgegebenen Verbindungstyp aufweist.

9. Verfahren nach Anspruch 8, bei dem der genannte Verbindungstyp 3G ist.

## Revendications

1. Procédé permettant de fournir ainsi que d'extraire et d'afficher des informations à l'attention d'un utilisateur d'un dispositif client connecté au niveau d'un réseau comportant :
(a) l'étape consistant à fournir un message au dispositif client (10) par le biais du réseau, le message comportant une première partie contenant une indication des informations d'affichage auxquelles le message se rapporte et une seconde partie identifiant une ou plusieurs caractéristiques des informations d'affichage, ladite indication contenant un sous-ensemble des informations d'affichage qui comprend un lien qui peut permettre au dispositif client d'extraire l'intégralité du contenu des informations d'affichage pour un abonnement client particulier ;
(b) l'étape consistant à comparer, au niveau du dispositif client (10), un ou plusieurs paramètres du dispositif client (10) avec lesdites une ou plusieurs caractéristiques et l'étape consistant à décider, en fonction de la comparaison, s'il faut oui ou non afficher les informations d'affichage ; et
(c) l'étape consistant à extraire l'intégralité du contenu des informations d'affichage qui se rapportent à l'indication au niveau du dispositif client et l'étape consistant à afficher ces informations si la décision prise au cours de l'étape (b) est positive,
(d) dans lequel une caractéristique des informations d'affichage identifiées dans ladite seconde partie dudit message est une heure d'affichage valide pour lesdites informations d'affichage et ladite étape consistant à comparer comporte l'étape consistant à comparer ladite heure d'affichage valide avec une heure actuelle dudit dispositif client (10).

2. Procédé selon la revendication 1, dans lequel ladite première partie de message contient une indication d'un emplacement dans ledit réseau en provenance duquel lesdites informations d'affichage peuvent être récupérées et ladite étape consistant à afficher comprend l'étape consistant à récupérer les informations d'affichage en provenance dudit emplacement.

3. Procédé selon la revendication 2, dans lequel ladite indication d'un emplacement est une adresse URL.

4. Procédé selon l'une quelconque des revendications 1 à 3, dans lequel une caractéristique des informations d'affichage identifiées dans ladite seconde partie dudit message est une indication d'une ou de plusieurs catégories de sujets des informations d'affichage et lesdits un ou plusieurs paramètres du dispositif client comportent un enregistrement indiquant quelles sont les informations de catégories de sujets qui doivent être affichées.

5. Procédé selon la revendication 4, comportant l'étape consistant à présenter à l'attention de l'utilisateur une liste des catégories de sujets disponibles et l'étape consistant à stocker ledit enregistrement en fonction de la sélection effectuée par l'utilisateur parmi ladite liste.

6. Procédé selon l'une quelconque des revendications 1 à 5, dans lequel une caractéristique des informations d'affichage identifiées dans ladite seconde partie dudit message est une condition du dispositif client nécessaire ou préférée pour l'affichage des informations.

7. Procédé selon la revendication 6, dans lequel ladite condition du dispositif client comporte une connexion de réseau ayant une largeur de bande supérieure à une valeur spécifiée.

8. Procédé selon la revendication 6, dans lequel ladite condition du dispositif client comporte une connexion de réseau en fonction d'un type de connexion spécifié.

9. Procédé selon la revendication 8, dans lequel ledit type de connexion est 3G.
